Europäisches Patentamt

European Patent Office

Office européen des brevets

(11) Publication number: **0 303 551 B1**

(12) **EUROPEAN PATENT SPECIFICATION**

(45) Date of publication of patent specification: **31.03.93**  (51) Int. Cl.⁵: **F16B 13/14**, E21D 21/00, E04B 1/41

(21) Application number: **88500079.4**

(22) Date of filing: **04.08.88**

(54) **Double action anchor.**

(30) Priority: **05.08.87 ES 8702295**

(43) Date of publication of application:
**15.02.89 Bulletin 89/07**

(45) Publication of the grant of the patent:
**31.03.93 Bulletin 93/13**

(84) Designated Contracting States:
**DE FR IT**

(56) References cited:
**DE-A- 3 100 730**
**DE-U- 8 712 538**

(73) Proprietor: **Trueba Güemes, Angel**
**Huertas no. 47**
**E-28014 Madrid(ES)**

(72) Inventor: **Trueba Güemes, Angel**
**Huertas no. 47**
**E-28014 Madrid(ES)**

(74) Representative: **Polo Flores, Carlos et al**
**c/o MODESTO POLO Dr. Fleming, 16**
**E-28036 Madrid (ES)**

Rank Xerox (UK) Business Services
(3.10/3.5x/3.0.1)

**Description**

This invention refers to a double action anchorage and a method of fixing such double action anchorage.

At the present time in the field of fasteners, there are different types of anchorings which can be separated into two groups: a) Anchorings by mechanical fastening, based on the expansion of metallic elements, through a tightening couple, expansion cone, etc. b) Anchorings whose supporting is achieved through adherences of mortar joined to them in the way of an envelopment.

This type of anchorage is defined in the standard of the "Union Europeenne pour le Agrement Technique dans la construction", in the ASTM E488-76- Methods Standard to the testing of anchoring resistance in elements of concrete and masonry, Mechanical Fasteners for Concrete, as well as in many publications of authors specialised in Anchorings.

DE-A-3 100 730 discloses a large scale anchor to be used in the field of coal mining and the like. The anchor requires a bore having a depth of 1.5 to 4 m within a rock structure. Threads are provided on the outer surface of the cylindrical shaft of the anchor. Coils are disposed around said threads. After the shaft of the anchor has been positioned within a bore, a two-component resin is injected through the hollow shaft of the anchor to fill the space within the tube and between the tube and the bore.

The present invention, however, is related to the field of fixing a bearing element, e.g. a screw, within a wall structure. Specifically, the present invention starts from the state of the art which is defined by a bar having a load applying means at its outer end to be fixed with mortar in a hole.

The problem underlying the present invention is to increase the load bearing capacity of the bar.

This problem is solved by a tension transmitting member which is stressed by a tension applied to the bar during hardening of the mortar.

The innovative characteristics of the anchoring, the object of this patent, are the following:

a) Obtain within the support material, opposed tensile and compression stresses of double action, and, as a result, a post-tensing in the material and an increase in the load-absorbing capacity. b) Incorporate between the anchoring's surface and the superior diameter hole of the anchoring, several helicoidal or tubular elements, through which mortar is injected and which also serves, as reinforcing bars for clamping and fundamentally to develop the stress of the post-tensing. c) Increase the diameter and the length of the hole, adjusting the loads to the support material's resistance, d) Localize the housing in the resistant areas of the support, avoiding lined, weathered areas, etc.

In this way, the anchoring, the object of this patent, is formed by A) Element B, a receiver of the external loads which can be a solid web bar, a tubular one, or any other rolled steel shape, with differentiated shapes to improve the adherences in the mortar, B) Helicoids or tubular elements M, C) Surrounding mortar me. The whole B, M and me are called the Bolt. The mortar is incorporated by injection through the helicoid (spring) or, in the case, through the tubular element. With the mortar still fresh, element B is incorporated. For small anchorings, the mortar can be incorporated by first impregnating the B + M and set also injecting first the hole and immediately incorporating the B + M set.

While the mortar hardens, element B is applied: Tightening couples, under traction produced by hydraulic jacks or another method, and as a result of the reactions produced, the post-tensing effect is obtained in it.

A BRIEF DESCRIPTION OF THE DRAWINGS

Figure 1 refers to the simplest type of anchorage according to the invention.

Figure 2 represents the application of an anchorage according to the invention with the hardened mortar.

Figure 3 refers to the adopting of a hexagonal head screw to an anchoring according to the invention.

Figure 4 illustrates an anchoring of the invention, in which element B of the screw is tubular.

Figure 5 represents the case in which the bar is quite long.

Figure 6 illustrates the case in which the element is embedded between two tubular pieces.

Figure 7 represents the case of a bolt of considerable length.

Figure 8 illustrates the application of the invention to the joint of two support elements similar to the ones represented in Figure 7.

Figure 9 represents the case where the transmitting element of the stresses and frame with mortar is made up of a group of longitudinal iron straps.

Figure 10 represents a diagram of tensile stresses in the bolt according to the invention.

EP 0 303 551 B1

Figure 11 illustrates the variation of the shear stresses in the case of a normal bolt with expansive mortar.

Figure 12 represents the critical stress curves on the bolt's edge.

Figure 13 illustrates the variation of these stresses.

Figure 14 represents the case of a bending-shear anchoring.

Figure 15 represents a diagram of stresses on the anchoring support.

Figure 16 illustrates a double anchoring according to the invention, in an adobe test piece.

DESCRIPTION OF THE INVENTION IN RELATION WITH THE PREFERRED EMBODIMENTS

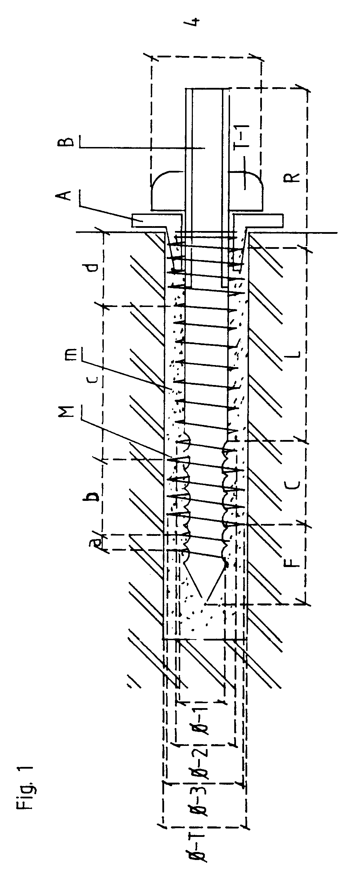

Figure 1 details the simplest anchoring. Element B is a screw with the following shapes: Zone F + C with spiral threading, a plain zone L and a zone R with metric threading. Element M is a spring with different pitches and diameters in: zona a of the fastener on screw B, zones b and d of the transmission of stresses to the support material, zone $\bar{c}$ of strapping. The surrounding material of the screw remains without adherences on the smooth zone L, impregnated or not with anti-adherent products.

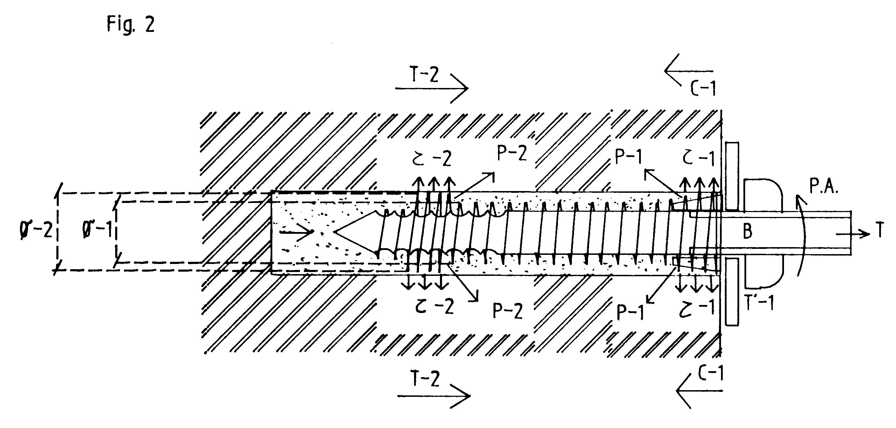

If when the mortar hardens, Figure 2, a tightening couple or a tensile load T is applied and screw B when it tries to come out, drags the spring, which remains fixed in zone a, along with it, producing a shortening of its length (b + c + d) and as a result, an increase in the diameters $\bar{\phi}$-3.

Therefore, in zones b and d, several complementary stresses $\sigma$-1 and $\sigma$-2, several armed bulb links and several loads P-1 and P-2 of a contrary sign are created, which lead, through the mortar, to a post-tensing effect on the support material.

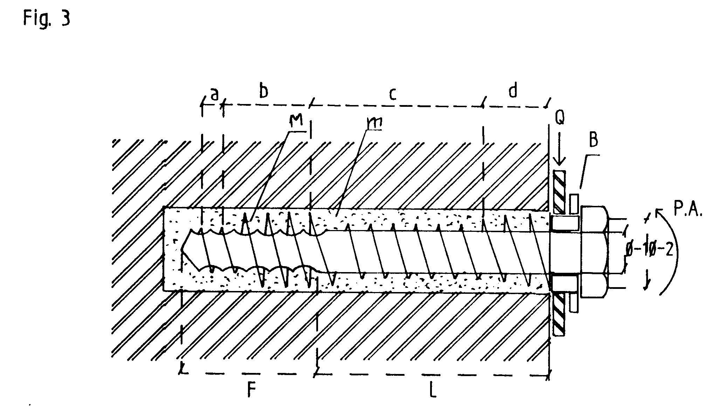

Figure 3 represents a head screw, which, in this case, is hexagonal, and which, in its initial position, remains at the bottom, in the spiral lines a of spring M. When the mortar has begun to harden, a tightening couple is applied. Spiral lines a are displaced on the threaded screws and as a result, this inserts itself in the joined mortar-spring as if it were placed on wood. The mortar-spring set makes the effect of a raw plug. The post-tensed stress are similar to the case of Figure 1.

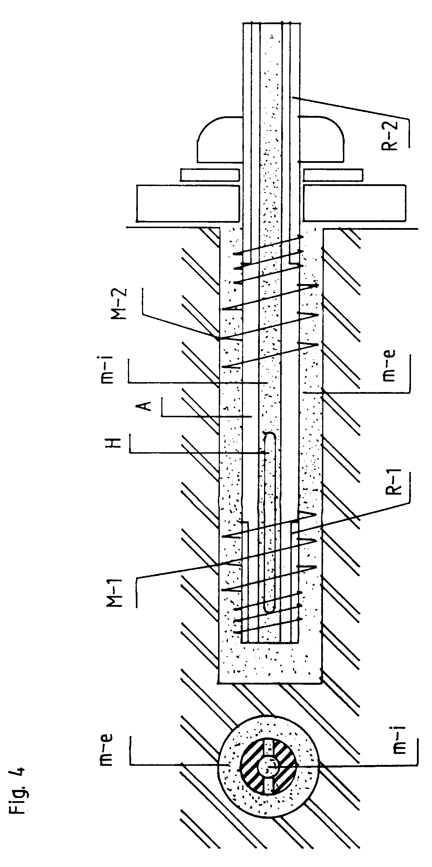

Figure 4 represents the case in which element B is tubular. It has several R-1 and R-2 screws as well as some slits, H drill-holes, etc., which create inside connections between the inside mortar m-i and the outside mortar m-e. Springs M-1 and M-2 are incorporated in the exterior areas. The mortar injected through the tube comes out of the splits or drill-holes and envelops element B forming the bolt. In this case, the fastening of the anchoring with the mortar is achieved with adherence stresses with the outside wall and also with the inside of the tube. The mortar which fills the splits or drill-holes acting as a shear, collaborates in an important way in the adherence of the tube to the envelopment mortar. The securing of the spring-tube set, in the support material is obtained through the mortar's adherence and also by the link effect, etc., in a similar way to Figure 1.

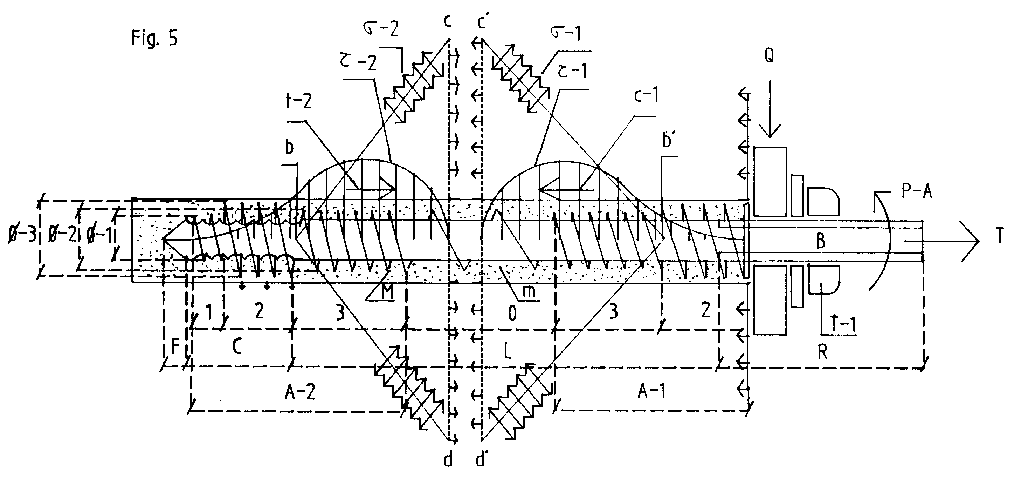

Figure 5 represents the case in which bar B is very long. The helicoidal element has two zones A-1 and A-2 and the fastening between them can be done correctly by spiral lines of more pitch or by casings made of plastic or another material.

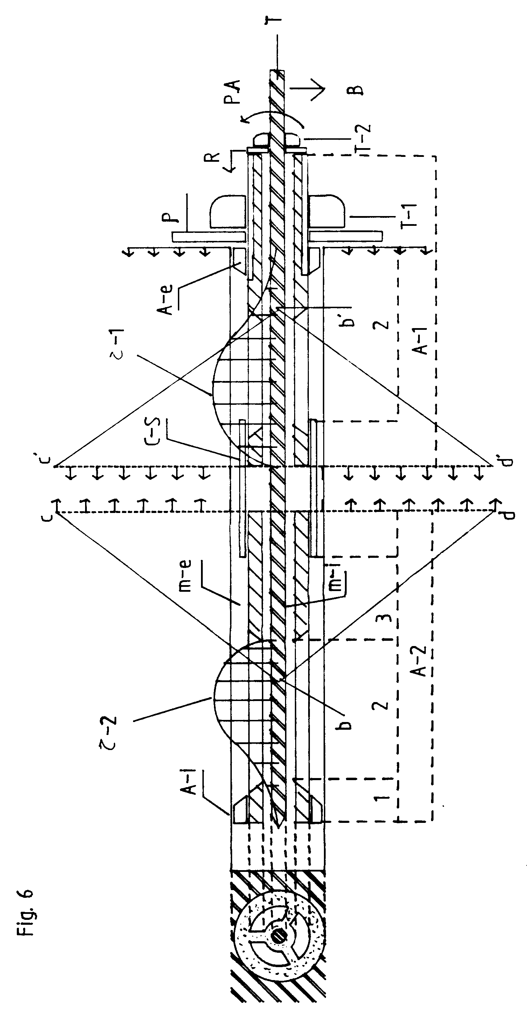

Figure 6 represents the case where B is embedded in two tubular elements A-1 and A-2 are secured by an elastic casing C-S. In this case, as B is impregnated with grease or lined with plastic in the area included in anchoring A-1, it is left without adherence to it, and is embedded in anchoring A-2. Tubes A-1 and A-2 transmitting the fastening stresses of an opposite sign to the support material, create a post-tensing on the support which avoids or delays the formation of the rupture cone. In order to favour the stresses of post-tensing through a link effect, conic nuts A-e and A-i can be incorporated.

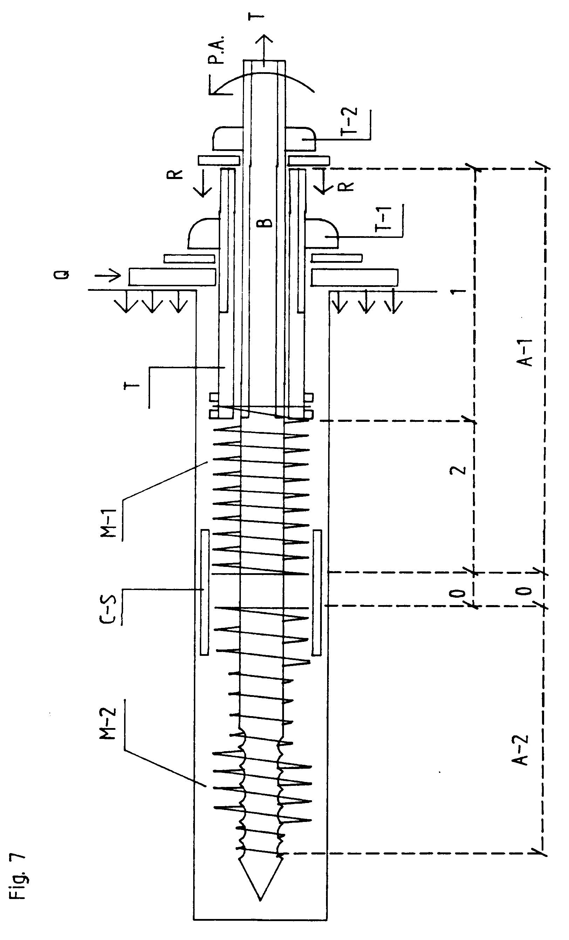

Figure 7 represents the case of a very long bolt formed, in its inside area A-2 by bar B and helicoidal element M-2 and in its outside area, by a helicoidal M-1 adjusted to tubular element T. Elements M-2 and M-1 are joined by casing C-S.

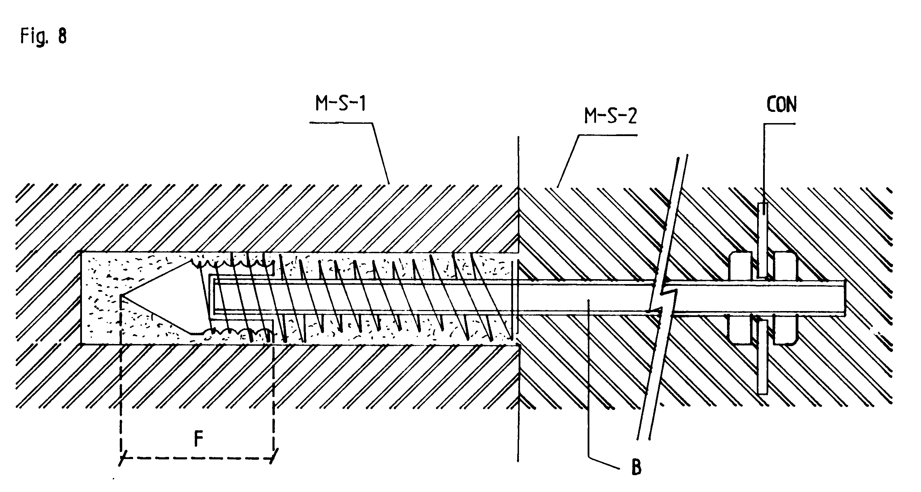

The Anchorings which are the object of this Patent can be used as well in order to join two support elements M-1 and M-2, Figure 8. In this case, Element B is a threaded bar B and the helicoid is incorporated to it through nut F. The fastener to the material M-S 2 is done through the connector CON or by embedding in concrete or in the mortar of Bar B. This bar can be used as a stirrup when M-S-2 is, for example, reinforced concrete.

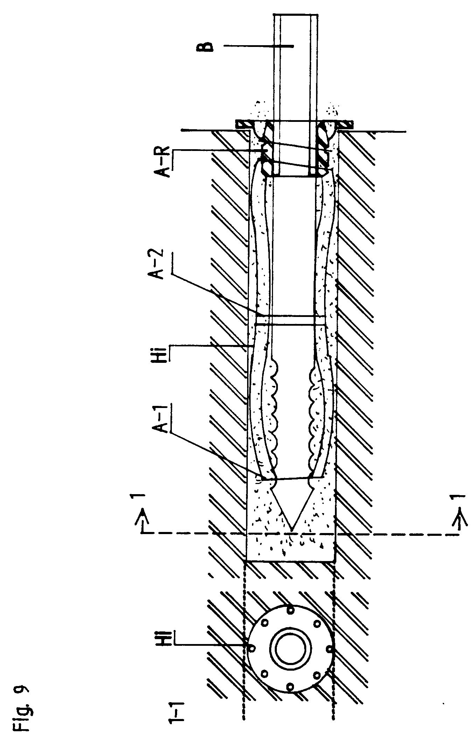

Figure 9 covers the case where the transmitting element of the stresses and reinforced mortar are formed by a set of longitudinal hoops H-i fixed to screw B by rings A. On the outside, washer A-r is detailed, as a mortar retainer with an overflow regulator for control of the filling.

We will now describe the conduct of the anchorings, which are the object of this Patent, as they would be submitted to tensile stresses or bendshear stresses.

3

When the anchoring is submitted to a tensile stress between it and the surrounding mortar and between the bolt and the support material, tensile shear and adherence stresss are originated. The high loads which support the type of anchorings, which are the object of this patent of invention, are higher than the ones established in the standards, as proven in many tests performed with different materials. It appears that aside from the stresses indicated, other stresses develop as: tangentials, on the spires of the helicoid or by a link effect on the bulbs as in the case of the spring or on the helicoidal part in the case of tubular transmission or another type which raises the stresses on the fastening. The establishing of the percentage of influence by one type of stress or another is practically impossible as it would be necessary to carry out very difficult tests.

To design the different anchorings, the object of this patent, we have relied on the bolting theory, which we will put forth below. For the representation of the laws for each one of the stresses, we will indicate the depth of the drill-hole in ordinates, beginning at level Ho, at its edge, and the stresses, in abscissas.

a) Tensile Stresses:

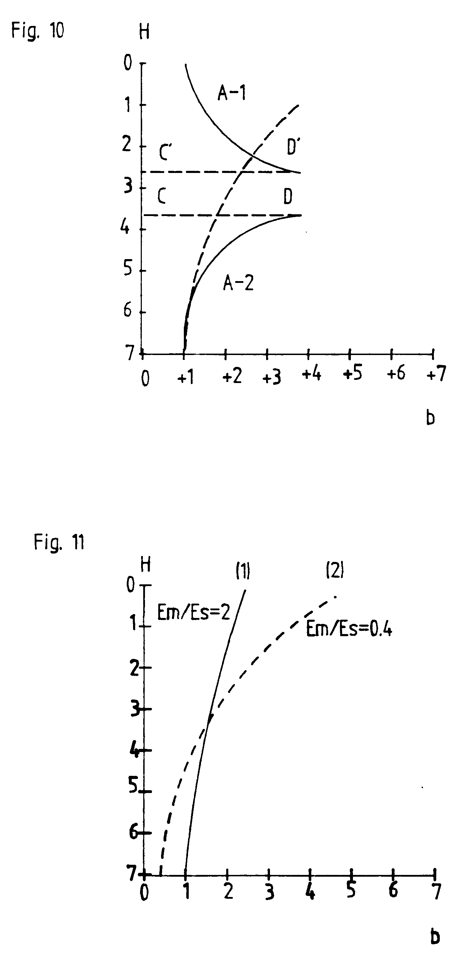

The bolt, when it is loaded, creates certain tensile stresses on the support which, when it reaches exhaustion, creates the rupture cone. Figure 10 represents the variation of stresses of a normal bolt with an H-7 depth. In order to increase the resistance capacity of the support, the stresses of the edge have to be avoided. This is achieved with this patent of invention when curve A-1 (area of the anchoring working under compression) is separated from curve A-2 (area of the anchor working under traction). The edge stresses, which are now opposed, have been moved to positions C'D' and CD, obtaining in this way, the transfer of the critical stresses to the inside of the support, which are already more resistant, and, in addition, compressed, by the post-tensing effect.

b) Shear stresses:

These are created in the mortar which is found in the space between the spiral lines or, in the case of tubular anchorings, in the space left in the corrugation, as well as in the space which, through the slits, connects the interior mortar and the outside one. These stresses are transmitted by the bolt to the support material through the creases of the drill-hole. The Em/Es ratio between the elasticity moduli of the mortar and the support is highly important in the distribution of these stresses.

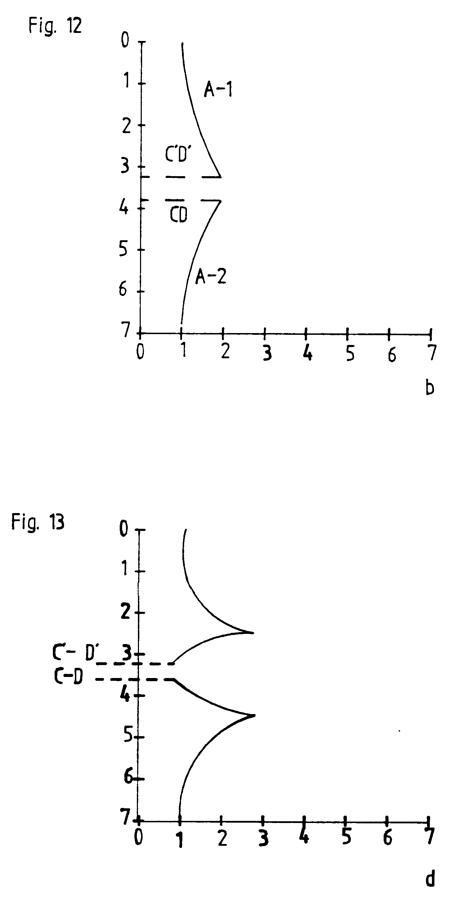

Figure 11 represents the variation of these stresses in the case of a normal bolt of depth H-7, with expansive mortar, without resins (used in the tests that are detailed at the conclusion of this Specification) $Em = 2,9X10^5$ $Kp/cm^2$ curve 1 and with resin mortar $Em = 7,5 X 10^4$ $Kp/cm^2$ curve 2, both of which are placed on type B-200 concrete. In both curves, the critical stresses are caused on the edge and decrease as the Em/Es ratio increases. The study of the mortars to be used is, then, important.

The distribution of the curves in zones A-1 and A-2 is represented in Figure 12. As the shear stresses are proportional to the resistance under compression of the support, it has been possible, with the displacement inside and the post-tensing, to increase the load absorption capacity of the support.

c) Adherence stresses:

Figure 13 represents the variation of these stresses. In this case, the influence of the stresses on the edge is less than before.

As these stresses are also proportional to the resistance to compression, the system which is the object of this patent of invention also increases the absorption capacity of the support by adherence.

d) Other stresses:

The possible tangential stresses, by the link effect and by mortar expansion, etc., which are specified and differentiated by the System are difficult to quantify and qualify.

Following this distribution of stresses, we can explain the theory of the Anchorings of this Patent, in an anchoring of great length Figure 5.

If, once the mortar has hardened, we apply a tightening couple, the screw tends to come out. In area A-2 the afore-mentioned stresses are created and in view of the impossibility of quantifying them, we will group them together in an adherence stress $\tau$-2, which are distributed according the theoretic curve shown. In area A-1 the reaction against the outside wall of the support produces other stresses of a contrary sign represented on curve $\tau$-1. The results of these stresses will be two contrary loads c-1 and t-2 and as a result, a post-tensing load on the support material. If reaction c-1 did not act on the support, it would lead, due to the tensile stresses $\tau$-2, to a breakage cone, according to to the direction of generatrices bc and bd. As there is no adherence with mortar in the area of screw L, the embedding of the set is located on the interior corrugated area C. Due to this circumstance, when the surface area of the breakage tone is increased, the formation of the cone is increased or delayed. Once the tightening couple is applied, reaction c-1 and the cone in the opposite direction is produced, b'c'd and as a consequence, the compression of the support material in zone cc' and dd'.

In Figure 6, if successive tensile loads are applied, on bar B, which is impregnated with an anti-adherent substance in its zone A-1, and screws T-2 and T-1 are tightened or a direct tightening couple is applied to screw T-2; the anchoring A-2 is extended and A-1 is compressed, the mortar adhered to these anchorings transmits the adherence stresses $\tau$-2 and $\tau$-1 to the support material, producing similar effects on this material, to those mentioned in regard to Figure 5.

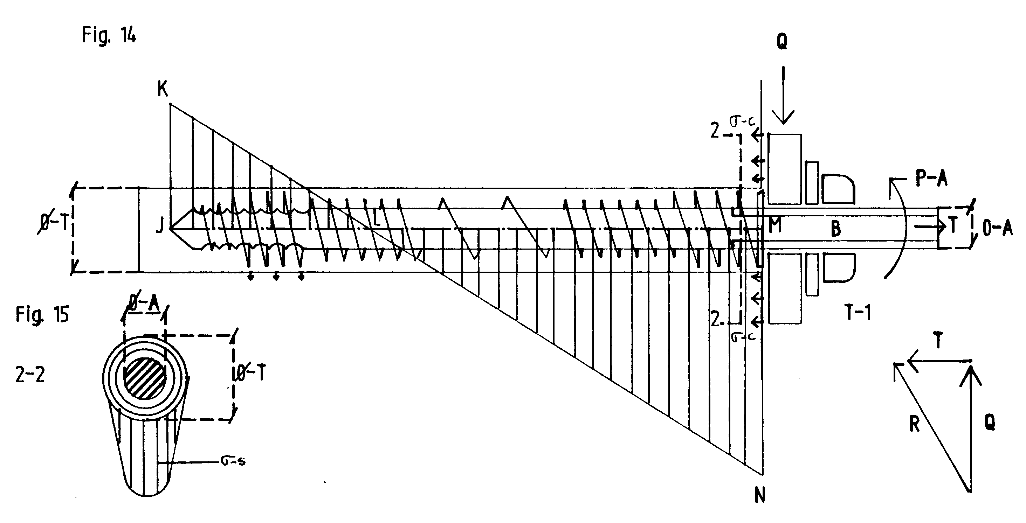

Figure 14 represents the case of the anchoring supports bend-shear loads. These loads lead to compression stresses in the support material, on the perimeter of contact of the support with the bolt, which we suppose will be distributed according to the law represented by curve KN. Maximum stresses MN are produced on the edge. The failure of the fastening is produced normally; due to breakage of the support, section 2-2 Figures 14 and 15 on the anchoring support, before exhaustion of the section of element B or the section made up of the connector-tube in the case of tubular transmissions.

In the System of the present Patent of Invention and working the Anchoring under bend-shear, the load absorbing capacity of the support and therefore the resistance of the anchoring are increased in accordance with the following characteristics: a) When the surrounding mortar is incorporated, the diameter in the support goes from $\phi$-A to $\phi$-T, Figure 14. The stresses $\sigma$-s, which are produced in the support, are diminished by ratio

$$\frac{\phi - A}{\phi - T};$$

b) This mortar due to its high resistance and also because it is strapped by the screw in the outside area, is always of greater resistance than that of the support; c) As the support material is compressed by the stresses $\sigma$-c Figure 14, the resistance to the compression increases; d) When reactions Q and T act, the result of this action is towards the inside of the support.

For the development of this Patent and as a verification of the theory put forth, many tests have been carried out on such diverse materials as: Hollow or solid brick constructions, some of which are more than 300 years old and entirely weathered; concretes of different resistances and even in adobe.

EXAMPLES REGARDING THE TESTS

These tests have been carried out with a Hydraulic Jack which has been duly set and with a piston section of 16,4 cms. and also with an extensometric bridge. The supports of the test tools have been arranged with a separation of more than two and a half times the length of the anchoring. In this way, we can avoid the plate effect which would prevent the formation of the breakage cone.

The characteristics of the mortars used have been the following:

**Mortar without epoxic components:**

**Free Expansion ASTM C-157 0, 10%**

**Elasticity module: 3 at 3,5 x $10^5$ Kg/$cm^3$**

| Resistance (12% water) | 24h | 3 days | 7 days | 28 days |
|---|---|---|---|---|
| Compression | 550 | 704 | 812 | 914 |
| Bending-tensile | 115 | 121 | 128 | 135 |

TEST -A) IN A TEST PIECE OF 40x40x40 In Concrete IN MASS B-200

ANCHORING

Hexagonal head screw (FIG. 3) in steel 8,8 and dimensions L = 120,0-1 = 10.

HELICOID:

In stainless steel ANSI 302 0 = 1 and dimensions (FIG. 1) $\phi$-1 = 9, $\phi$-2 = 12, $\phi$-3 = 18, a = 12, b = 20, c = 44, d = 16.

DRILL HOLE:

0-18, L = 100. Located in the center of one side.

HARDENING TIME:

76 hour.

LOADS:

T. Couple 4 m/Kg. applied 12 hours after injecting.

TENSILES:

Successive loads are applied with a permanence of more than 5 minutes and several pressures of 140, 160, and 220 Kg/cm$^2$. No anomalies nor load drops are produced.

BREAKAGE:

260*16,4 = 4.264 Kgs. the test piece breaks in a star without a breakage cone being produced.

A STUDY OF THE STRESSES:

a) Steel tensile stress of the screw.

$$\sqrt{}\ a = \frac{4.264}{\pi \times 4^2} = 84,87\ Kg/mm^2$$

A minimum diameter of the threaded spiral screw 0 = 8
b) Average stress of mortar/concrete adherence

$$\frac{4.264}{\pi \times 1,8 \times 10} \approx 75,44\ Kg/cm^2$$

COMMENTS.

A) The lack of formation of the breakage cone indicates that the embedding has been located at the bottom of the helicoidal zone b (Figure 1).
B) The steel stress indicates that the elastic limit has been reached and that the balance point between the exhaustion of the screw and the load absorbing capacity of the support material.
C) Comparing the adherence b) with that of the corrugated bar embedded in the concrete, this is determined according to the C.E.B. by $\tau$dn = 0,76$\sigma$bk.

In this case, the value is $\tau dn = 0,076 \times 200 = 152$ Kg/cm$^2$. The factor of increasing the resistance due to the System to be Patented, is the increase of the load absorbing capacity of the concrete, equivalent to

$$K = \frac{75,44}{15,2} = 4,96$$

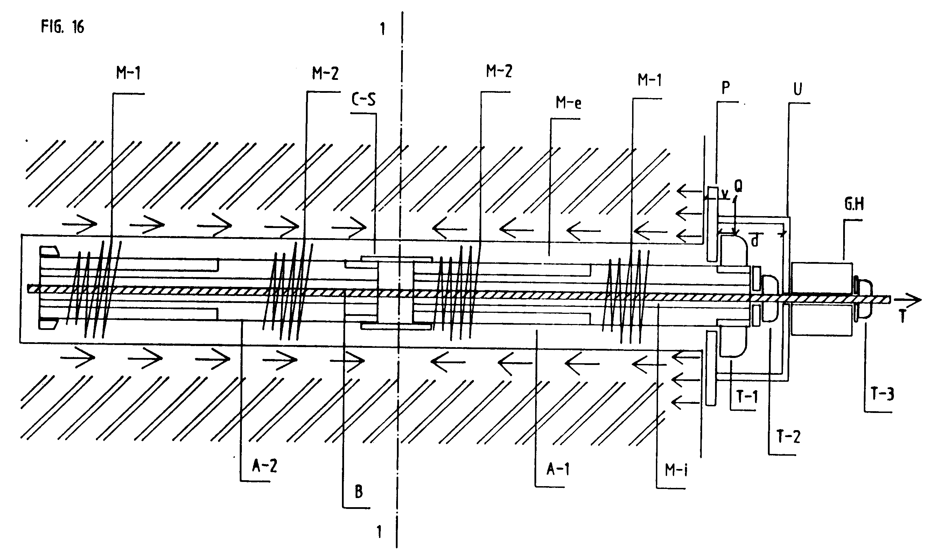

TEST -B) IN A TEST PIECE OF 20x30x55 OF ADOBE WITH AN ULTIMATE STRESS OF A SPECIMEN OF 62 Kg/cm$^2$ (Figures 6 and 16).

ANCHORING:

Made up of two Anchorings A-1 and A-2 measuring L = 250, $\phi$-e = 18, $\phi$-i = 14mm., corrugated in an area 2 and three longitudinal slits of 4mm. and L = 120mm. These anchorings are joined by a plastic casing. The total length of the anchoring is 500mm.

HELICOIDS:

Each anchoring has two helicoids M-1 and M-2 incorporated.

CONNECTOR:

B, Threaded bar $\phi$-10, steel ST-35, impregnated with grease in the embedded area in anchoring A-1.

WASHER LINK:

A-1 = 32-18-15.

DRILL HOLE:

Long. 550 mm., $\phi$ = 32.

TEST TOOLS.

Hydraulic jack with a surface piston 16,4cm$^2$.

USEFUL ARRANGEMENTS:

The test piece is free, without support on it. The Jack is applied directly on the anchoring by means of a support tool in a U.

1ST TEST LOADS:

The tensile T is achieved successively with permanences of more than 5 minutes and successive tightening of screws T-1 and T-2.
Tensile loads are applied of 140, 160, 200, 240, and 270 Kg/cm$^2$.

BREAKAGE.

Connector breakage 320x16,4 = 5.248 Kgs. The connector has been stretched and breaks at screw T-2.

2ND TEST:

The distance d of the tool U is decreased and it is mounted once again on the jack in the same way.

7

LOADS:

Equal loads to those of test 1) are applied and with the same permanences.

BREAKAGE:

Connector breakage 300x16,4 = 4.920 Kgs. The connector breaks in the same way as it does in test 1). The test piece after these tests does not show any cracks or alterations of any kind.

STUDY OF STRESSES.

a) Steel stress of the connector

$$1ST \ TEST \quad \sigma a = \frac{5.248}{\pi \times 5^2} = 66,85 \ Kg/mm^2$$

$$2ND \ TEST \quad \sigma a = \frac{4.920}{\pi \times 5^2} = 62,67 \ Kg/mm^2$$

b) Adherence stresses in the corrugated areas

$$1ST \ TEST \quad \tau 1 \frac{5.248}{\pi \times 1,8 \times 12} = 77,37 \ Kg/cm^2$$

$$2ND \ TEST \quad \tau 2 \frac{4.920}{\pi \times 1,8 \times 12} = 72,54 \ Kg/cm^2$$

COMMENTS.

A) The non-formation of the breakage cone and the lack of transversal breakage of the test piece shows that inside of the adobe, a post-tensing has taken place, with a compression in section 1-1 of:

$$\sigma c = \frac{5.248}{section \ 1-1} = \frac{5.248}{20 \times 30} = 8,74 \ Kg/cm^2$$

B) Comparing the adherence b) with the that of the corrugated bar embedded in the concrete, it is determined according to C.E.B. by $\tau dn = 0,076 \sigma bk$.
Taking as a characteristic resistance for the adobe

$$\sigma bk = \frac{62}{1,5} = 41,33$$

$\tau dn = 0,076 \times 41,33 = 3,14 \ Kg/cm^2$ the factor of increase of resistance according to the influence of other stresses of the System to be patented will be

$$(b,2o) \quad k = \frac{72,54}{3,14} = 23,10$$

8

EP 0 303 551 B1

TEST -C) A SHEAR-BEND ON THE SAME ANCHORING OF THE TESTS B)

Withdrawl of the pump and tool U, the test piece is post-tensed by the retention exerted by nuts T-1 and T-2.

The test piece is secured on a test bench and is tested for shearing by adapting the stress tools on nut T-2, with a span of 15 mm.

The deflections are measured with a fleximeter applied to the nut.

LOADS:

Successive loads of 525 and 1.050 Kgs. with greater permanences of 5 minutes, the deflections obtained are less than

$$\frac{V}{400}$$

BREAKAGE.

Q = 1.350 Kgs. THE TEST PIECE BREAKS IN THE LONGITUDINAL SECTION OF THE ANCHORING.

STUDY.OF STRESSES:

Assuming that the law of distribution of stresses is (Fig. 14) a straight line KN and that the stress at the end MN, is double that of the inside, and that the stresses are uniformly distributed on a segment of angle Q = 160o, we can reach the formula

$$\sigma \, MN = 1{,}05 \quad \frac{3e+4B}{\phi bXB^2} \; X \; Q$$

in which e is the thickness of the load, B the length of the anchoring and $\phi$b the diameter of the bolt.

The result to be applied from this formula will be:

$$\sigma \, MN = 1{,}05 \quad \frac{\frac{3x1{,}5 + 4x50}{2}}{3{,}2 \; x \; 50^2} \; x \; 1.350 = 51{,}19 \; Kg/cm^2$$

COMMENTS.

The ultimate stress $\sigma$ MN = 51,19 very high in the case of there not having been post-tensing, is normal and confirms the theory put forth, when it is considered that the outside wall of the test piece is compressed by plate P.

As a result and in summary of the foregoing, the system, the object of this patent can adapt the resistance of the anchoring as such B, without increasing its section to the characteristics of the support material; it will suffice to increase the diameter of drill-hole $_{0-T}$ and in its case, the diameter of $_{0-i}$ and the steps of the helicoidal element. The form, dimensions and materials could be variable and in general whatever is accessory or secondary, as long as it does not alter, change or modify the essential nature of the object described.

**Claims**

**1.** A double action anchorage to be fixed within a hole comprising:

9

a) a bar (B) having at its outer portion load applying means, at least one threaded portion and at least one smooth portion on its outer surface, and

b) a tension transmitting member comprising a helicoidal member or a tube member (M) arranged such that it surrounds the bar and having at least a portion thereof in engagement with the threaded portion of the bar,

c) a mortar filled into the hole and surrounding the bar and the tension transmitting member,

wherein the tension transmitting member is stressed by a tension applied via the load applying means to the bar.

2.  Method of fixing a double action anchorage according to claim 1, comprising the steps of:

a) forming a hole,

b) introducing into said hole either

b1) fresh mortar and then inserting an assembly including the tension transmitting member and the bar, or

b2) the tension transmitting member, injecting fresh mortar into the hole and introducing said bar, or

b3) an assembly of the tension transmitting member and the bar which has been impregnated with fresh mortar,

c) applying a tension to the bar to stress the tension transmitting member.

**Patentansprüche**

1.  Doppelt wirkende Verankerung zur Befestigung in einem Loch, umfassend:

a) eine Stange (B), die Lastaufbringmittel an ihrem Außenabschnitt, mindestens einen mit Gewinde versehenen Abschnitt und mindestens einen glatten Abschnitt an ihrer Außenfläche aufweist und

b) ein Zugübertragungselement, umfassend ein spiralenförmiges Element oder ein Rohrelement (M), welches derart ausgebildet ist, daß es die Stange umgibt, und das mit mindestens einem Abschnitt von ihm in Eingriff mit dem Gewindeabschnitt der Stange steht,

c) Mörtel, der in das Loch eingefüllt ist und die Stange sowie das Zugübertragungselement umgibt,

wobei das Zugübertragungselement durch über die Lastaufbringmittel auf die Stange aufgebrachten Zug gespannt wird.

2.  Verfahren zum Fixieren einer doppelt wirkenden Verankerung nach Anspruch 1, umfassend die Schritte:

a) Ausbilden eines Lochs,

b) Einführen in das Loch entweder

b1) frischen Mörtel, um anschließend eine Garnitur einzuführen, die das Zugübertragungselement und die Stange umfaßt, oder

b2) das Zugübertragungselement, Einspritzen frischen Mörtels in das Loch und Einführen der Stange, oder

b3) eine aus dem Zugübertragungsglied und der Stange bestehende Garnitur, die mit frischem Mörtel versehen wurde, und

c) Aufbringen von Zug auf die Stange, um das Zugübertragungselement zu spannen.

**Revendications**

1.  Un dispositif d'ancrage à double action devant être fixé à l'intérieur d'un trou, comprenant :

a) un barreau (B) présentant, à sa partie extérieure, des moyens d'application de charge, au moins une partie filetée et au moins une partie lisse sur sa surface extérieure, et

b) un élément de transmission de tension comprenant un élément hélicoïdal ou un élément tubulaire (M) disposé de telle manière qu'il entoure le barreau et présentant au moins une partie en prise avec la partie filetée du barreau,

c) un mortier remplissant le trou et entourant le barreau et l'élément de transmission de tension,

dans lequel l'élément de transmission de tension est mis sous contrainte par une tension appliquée par l'intermédiaire des moyens d'application de charge au barreau.

2.  Procédé de fixation d'un dispositif d'ancrage à double action selon la revendication 1, comprenant les opérations consistant à :

a) former un trou,

b) introduire dans ledit trou soit

b1) du mortier frais et insérer ensuite un ensemble comprenant l'élément de transmission de tension et le barreau, ou

b2) l'élément de transmission de tension, injecter du mortier frais dans le trou et introduire ledit barreau, ou

b3) un ensemble formé par l'élément de transmission de tension et le barreau qui a été imprégné de mortier frais,

c) appliquer une tension au barreau pour mettre sous contrainte l'élément de transmission de tension.

Fig. 1

Fig. 2

Fig. 3

EP 0 303 551 B1

Fig. 4

Fig. 5

Fig. 6

Fig. 7

EP 0 303 551 B1

Fig. 8

M-S-1

M-S-2

CON

B

F

EP 0 303 551 B1

EP 0 303 551 B1

Fig. 9

20

Fig. 10

Fig. 11

Fig. 12

Fig. 13

Fig. 14

Fig. 15

FIG. 16